# NOUVEAU FASCICULE DE BREVET EUROPEEN

(11) **EP 0 547 965 B2**
(45) Date de publication et mention de la décision concernant l'opposition: **07.04.1999**
(45) Mention de la délivrance du brevet: 30.08.1995
(21) Numéro de dépôt: 92403422.6
(22) Date de dépôt: 16.12.1992
(51) Int. Cl.: G02C 13/00

(54) **Appareil de centrage pour lentille ophtalmique**
Zentriergerät für Augen-Korrekturgläser
Centering apparatus for ophtalmic lenses

(30) Priorité: 18.12.1991 FR 9115717
(43) Date de publication de la demande: 23.06.1993
(73) Titulaire: ESSILOR INTERNATIONAL Compagnie Générale d'Optique, F-94028 Créteil Cédex (FR)
(72) Inventeur: Joncour, Christian, F-94410 Saint Maurice (FR)
(74) Mandataire: CABINET BONNET-THIRION

(56) Documents cités:
- EP-A- 0 206 860
- EP-A- 0 274 921
- DE-A- 1 652 171
- DE-A- 2 931 723
- DE-A- 4 012 661
- DE-U- 8 809 365
- FR-A- 2 607 268
- PATENT ABSTRACTS OF JAPAN vol. 15, no. 316 (P-1237) 13 août 1991 ; & JP-A-31 13 415
- Handbuch für Augenoptik, herausgegeben von Carl Zeiss, Oberkochen, 1977, pp. 219-224

## Description

La présente invention concerne d'une manière générale le centrage auquel il est nécessaire de procéder avant le détourage d'une lentille ophtalmique pour s'assurer que, eu égard aux divers paramètres oculaires à respecter, et notamment à l'écart pupillaire du sujet concerné, cette lentille ophtalmique recouvre bien en chacun de ses points le cercle de la monture de lunettes qu'elle doit équiper et donc qu'elle convient bien à celui-ci.

En pratique, il est le plus souvent procédé par comparaison de son contour avec celui d'un gabarit, à l'aide d'un appareil de centrage approprié à cet effet.

Un tel appareil de centrage se trouve notamment décrit dans le brevet français No 2 607 268.

Il comporte, globalement, deux voies optiques d'observation ayant en commun un tronçon émergeant par lequel se fait pour l'observateur la superposition de l'un et de l'autre des contours à comparer.

L'une de ces voies optiques est issue d'une première platine, qui est translucide, en étant en pratique en verre dépoli, et sur laquelle doit être posée la lentille ophtalmique à centrer.

L'autre est issue d'une deuxième platine, qui, distincte de la première, est à l'écart de celle-ci, et grâce à laquelle est susceptible d'être observé le contour du gabarit auquel doit être comparé celui de la lentille ophtalmique.

Dans le brevet français No 2 607 268, cette deuxième platine est adaptée à recevoir matériellement, par l'intermédiaire d'un socle, un réel gabarit, et elle est disposée à l'avant du bâti, à la faveur d'un évidement de celui-ci débouchant en façade.

Cette disposition, qui facilite avantageusement les opérations lorsqu'un réel gabarit est ainsi mis en oeuvre, a donné et peut encore donner satisfaction.

Mais elle a pour inconvénient de conduire à des réalisations relativement encombrantes, à raison, notamment, de l'évidement nécessaire pour donner accès à la platine sur laquelle doit être posé le gabarit.

Il est connu, par ailleurs, dans les opérations de centrage, de substituer à un réel gabarit un simple tracé immatériel formé à cet effet sur un écran électronique d'affichage.

C'est le cas, par exemple, dans le brevet européen No 0 206 860 et dans la demande de brevet allemand No 40 12 661.

Mais, dans le brevet européen No 0 206 860, la lentille ophtalmique à centrer doit être posée sur l'écran électronique d'affichage.

Or cette lentille présente par elle-même une certaine épaisseur, et, lorsqu'il s'agit d'une lentille ophtalmique progressive, il est en outre nécessaire d'interposer entre elle et l'écran électronique d'affichage un quelconque support, tel que trépied, plot ou autre, pour en compenser les variations d'épaisseur le long de son contour.

Les repères à viser, qui sont ceux qu'elle porte sur sa face supérieure, sont alors inévitablement relativement éloignés de l'écran électronique d'affichage, et il peut en résulter une erreur de parallaxe.

En outre, dans ce brevet européen No 0 206 860, dans lequel la comparaison effectuée concerne des objets, l'observation se fait en pratique à l'aide d'un simple objectif monoculaire, et elle n'est donc pas toujours aisée à effectuer.

Dans la demande de brevet allemand No 40 12 661, par ailleurs, le tronçon émergeant commun au deux voies optiques d'observation s'étend à compter d'un prisme.

Mais ce prisme n'intervient pas de la même façon sur l'une et l'autre de ces voies optiques d'observation.

En effet, il est simplement traversé par la voie optique d'observation issue de la platine constituant un écran électronique d'affichage, tandis qu'il impose une double réflexion à la voie optique d'observation issue de la platine portant la lentille à centrer

Il en résulte, outre un allongement de parcours de la deuxième voie optique d'observation par rapport à la première, un déséquilibre de l'intensité des images observées, l'intensité de l'image en provenance de la lentille se trouvant sensiblement réduite, de l'ordre de la moitié, par rapport à celle de l'image en provenance de l'écran électronique d'affichage.

En outre, dans cette demande de brevet allemand No 40 12 661, le tronçon émergeant commun aux deux voies optiques d'observations est incliné sur la verticale suivant un angle de l'ordre de 60°.

Il en résulte, pour l'appareil correspondant, une emprise au sol, et donc un encombrement, non négligeable.

La présente invention a d'une manière générale pour objet une disposition qui, tout en mettant en oeuvre un écran électronique d'affichage pour la constitution du gabarit auquel il faut comparer la lentille ophtalmique à centrer, permet avantageusement d'éviter ces inconvénients.

De manière plus précise, elle a pour objet un appareil de centrage pour lentille ophtalmique, du genre comportant deux voies optiques d'observation issues chacune respectivement de deux platines distinctes, à savoir, une première platine, qui est translucide, et sur laquelle doit être posée la lentille ophtalmique à centrer, et une deuxième platine, qui, à l'écart de la première, est constituée par un écran électronique d'affichage, et grâce à laquelle est susceptible d'être observé un contour de gabarit auquel doit être comparé celui de la lentille ophtalmique, lesdites voies optiques d'observation ayant en commun un tronçon émergeant par lequel se fait pour l'observateur la superposition de l'un et de l'autre desdits contours avec, sur ce tronçon émergeant, un moyen d'observation cet appareil de centrage étant d'une manière générale caractérisé en ce que le tronçon émergeant commun aux deux voies optiques d'observation s'étend à compter d'une lame semi-transparente, qui replie la voie optique d'observation issue de la première platine et est traversée par la voie optique d'observation issue de la deuxième platine, et en ce que, en amont de cette lame semi-transparente, la voie optique d'observation issue de la deuxième platine est repliée par un miroir, en sorte que seuls interviennent, pour l'ensemble des voies optiques d'observation en amont du moyen d'observation, ladite lame semi-transparente et ledit miroir.

Ainsi se trouvent avantageusement associés les avantages résultant d'une dissociation entre les deux platines mises en oeuvre et ceux résultant de la substitution à un réel gabarit d'un écran électronique d'affichage permettant de simplement tracer le contour d'un tel gabarit.

En outre, par rapport à l'appareil de centrage faisant l'objet du brevet français No 2 607 268, l'encombrement est avantageusement moindre et le nombre d'éléments optiques à mettre en oeuvre se trouve conjointement plus réduit.

Corollairement, par rapport à l'appareil de centrage faisant l'objet du brevet européen No 0 206 860, aucune erreur de parallaxe n'est à craindre, la comparaison portant sur des images coplanaires et non pas sur des objets, et, de manière avantageuse, l'observation peut se faire à l'aide d'une lentille binoculaire, au bénéfice du confort de l'opérateur.

Enfin, par rapport à l'appareil de centrage faisant l'objet de la demande de brevet allemand No 40 12 661, un équilibrage satisfaisant des images à comparer est obtenu, la lame semi-transparente ayant sensiblement la même incidence sur l'intensité de l'une et l'autre de ces images, et, en liaison avec une inclinaison à 30° sur la verticale du tronçon émergeant commun aux deux voies optiques d'observation, l'encombrement est relativement plus faible.

Cet encombrement est en pratique minimal.

Les caractéristiques et avantages de l'invention ressortiront d'ailleurs de la description qui va suivre, à titre d'exemple, en référence aux dessins schématiques annexés sur lesquels :
la figure 1 est, en élévation, un bloc diagramme de la partie concernée de l'appareil de centrage suivant l'invention ;
la figure 2 est un bloc diagramme analogue à celui de la figure 1, pour une variante de réalisation.

Globalement, et tel qu'illustré sur ces figures, l'appareil de centrage suivant l'invention relève d'une réalisation du type de celle décrite dans le brevet français No 2 607 268.

Cet appareil de centrage ne sera donc pas décrit dans tous ses détails ici.

Il suffira d'indiquer qu'il comporte, globalement, dans un bâti 10, deux voies optiques d'observation V1, V2, qui, issues chacune respectivement de deux platines distinctes, à savoir une première platine P1 et une deuxième platine P2, ont en commun un tronçon émergeant V par lequel se fait l'observation recherchée.

La platine P1 est translucide.

Il s'agit en pratique d'une plaque en verre dépolie sur sa face intérieure

C'est sur cette platine P1 que doit être posée la lentille ophtalmique à centrer, non représentée.

Conjointement, c'est grâce à la platine P2 qu'est susceptible d'être observé un contour de gabarit auquel doit être comparé celui de cette lentille ophtalmique.

La platine P2 est constituée par un écran électronique d'affichage.

Il peut s'agir par exemple d'un écran plat de type LCD, c'est-à-dire d'une matrice de cristaux liquides.

Un tel écran électronique d'affichage étant bien connu par lui-même, il ne sera pas décrit plus en détail ici.

Il suffira d'indiquer que, à l'aide par exemple de données stockées dans une mémoire, ou à l'aide de données fournies par un palpeur, il est possible d'y tracer avec toutes les inversions nécessaires un quelconque contour, et, par exemple, celui d'un quelconque contour de gabarit image de celui du cercle de monture de lunettes à équiper et d'y déplacer ce contour à sa convenance.

Suivant l'invention, le tronçon émergeant V commun aux deux voies optiques d'observation V1, V2 s'étend à compter d'une lame semi-transparente L, qui replie l'une de ces voies optiques d'observation V1, V2, et qui est traversée par l'autre.

En pratique, la lame semi-transparente L replie la voie optique d'observation V1 issue de la première platine P1, et elle est traversée par la voie optique d'observation V2 issue de la deuxième platine P2.

En amont de cette lame semi-transparente L, la voie optique d'observation V1 issue de la première platine P1 est sensiblement verticale.

Préférentiellement, et tel que représenté, la lame semi-transparente L est globalement inclinée d'environ 30° sur l'horizontale, en sorte que le tronçon émergeant V commun aux deux voies optiques d'observation V1, V2 est lui-même incliné sur la verticale suivant un angle A sensiblement égal à 30°, au bénéfice de l'ergonomie en la matière.

En amont de la lame semi-transparente L, la voie optique d'observation V2 issue de la deuxième platine P2 est repliée par un miroir M dûment incliné en conséquence par rapport à l'horizontale.

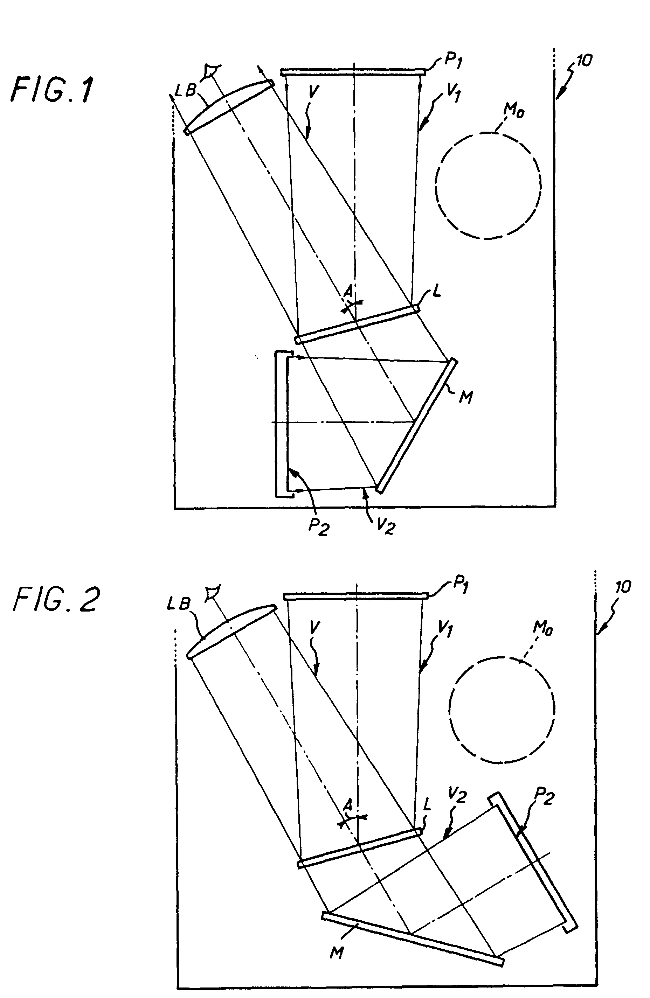

Dans la forme de réalisation représentée sur la figure 1, la deuxième platine P2 est du même côté que le tronçon émergeant V commun aux deux voies optiques d'observation V1, V2 par rapport à ce miroir M.

En variante, figure 2, cette deuxième platine P2 est du côté opposé au tronçon émergeant V commun aux deux voies optiques d'observation V1, V2 par rapport au miroir M.

Quoi qu'il en soit, le miroir M constitue en pratique le seul élément optique que comporte la voie optique d'observation V2 issue de la deuxième platine P2 entre cette deuxième platine P2 et la lame semi-transparente L

Il en résulte une grande simplicité de fabrication, et l'ensemble peut facilement être logé dans un volume relativement réduit.

Il en est d'autant plus ainsi que la lame semi-transparente L peut elle-même être avantageusement de taille relativement petite.

Grâce, ainsi, au faible encombrement de l'ensemble, et tel que schématisé en traits interrompus sur les figures, le moteur M₀ nécessaire par ailleurs aux opérations de glantage usuellement consécutives au centrage recherché peut aisément être logé dans le bâti 10.

Enfin, sur le tronçon émergeant V commun aux deux voies optiques d'observation V1, V2, Il est préférentiellement interposé, tel que représenté, une lentille binoculaire LB, de nature à faciliter l'observation à assurer

En service, la lentille ophtalmique à centrer est simplement posée à plat sur la première platine P1.

Le tronçon émergeant V commun aux deux voies optiques d'observation V1, V2 permet alors la superposition de son contour avec celui d'un quelconque contour de gabarit, qui, tracé à cet effet sur l'écran électronique d'affichage que constitue la deuxième platine P2, correspond à celui du cercle de monture de lunettes à équiper, les inversions pratiquées électroniquement permettant par ailleurs que cette superposition se fasse dans le bon sens.

Pour assurer le centrage recherché par rapport à ce contour, il suffit de déplacer en conséquence sur la première platine P1 la lentille ophtalmique à centrer.

Bien entendu, la présente invention ne se limite pas aux formes de réalisation décrites et représentées, mais englobe toute variante d'exécution dans les limites des revendications.

## Revendications

1. Appareil de centrage pour lentille ophtalmique. du genre comportant deux voies optiques d'observation (V1, V2) issues chacune respectivement de deux platines (P1, P2) distinctes, à savoir, une première platine (P1), qui est translucide, et sur laquelle doit être posée la lentille ophtalmique à centrer, et une deuxième platine (P2), qui, à l'écart de la première, est constituée par un écran électronique d'affichage, et grâce à laquelle est susceptible d'être observé un contour de gabarit auquel doit être comparé celui de la lentille ophtalmique, lesdites voies optiques d'observation (V1, V2) ayant en commun un tronçon émergeant (V) par lequel se fait pour l'observateur la superposition de l'un et de l'autre desdits contours, avec, sur ce tronçon émergeant (V), un moyen d'observation (LB), caractérisé en ce que le tronçon émergeant (V) commun aux deux voies optiques d'observation (V1, V2) s'étend à compter d'une lame semi-transparente (L), qui replie la voie optique d'observation (V1) issue de la première platine (P1) et est traversée par la voie optique d'observation (V2) issue de la deuxième platine (P2), et en ce que, en amont de cette lame semi-transparente (L), la voie optique d'observation (V2) issue de la deuxième platine (P2) est repliée par un miroir (M), en sorte que seuls interviennent, sur l'ensemble des voies optiques d'observation V₁, V₂ en amont du moyen d'observation (LB), ladite lame semi-transparente (L) et ledit miroir (M).

2. Appareil de centrage suivant la revendication 1, caractérisé en ce que, en amont de la lame semi-transparente (L), la voie optique d'observation (V1) issue de la première platine (P1) est sensiblement verticale.

3. Appareil de centrage suivant l'une quelconque des revendications 1, 2, caractérisé en ce que, par rapport au miroir (M), la deuxième platine (P2) est du même côté que le tronçon émergeant (V) commun aux deux voies optiques d'observation (V1, V2).

4. Appareil de centrage suivant l'une quelconque des revendications 1, 2, caractérisé en ce que, par rapport au miroir (M), la deuxième platine (P2) est du côté opposé au tronçon émergeant (V) commun aux deux voies optiques d'observation (V1, V2).

5. Appareil de centrage suivant l'une quelconque des revendications 1 à 4, caractérisé en ce que le tronçon émergeant (V) commun aux deux voies optiques d'observation (V1, V2) est incliné sur la verticale suivant un angle (A) sensiblement égal à 30°.

6. Appareil de centrage suivant l'une quelconque des revendications 1 à 5, caractérisé en ce que le moyen d'observation (LB) interposé sur le tronçon émergeant (V) commun aux deux voies optiques d'observation (V1, V2) est une lentille binoculaire (LB).

## Patentansprüche

1. Vorrichtung zum Zentrieren von ophtalmologischen Linsen der Art umfaßend, zwei optische Beobachtungspfade (V1, V2), ausgehend jeweils von zwei getrennten Platinen (P1, P2), nämlich einer ersten Platine (P1), welche durchsichtig ist, und auf welche die zu zentrierende ophtalmologische Linse gelegt werden muß, und einer zweite Platine (P2), welche von der ersten beabstandet ist und welche durch einen elektronischen Anzeigeschirm gebildet ist, und dank welcher es möglich ist, den Umriß einer Schablone zu beobachten, mit welchem der der ophtalmologischen Linse verglichen werden muß, wobei die optischen Beobachtungspfade (V1, V2) einen gemeinsamen Austrittsabschnitt (V) aufweisen, durch welchen für den Beobachter die Überlagerung des einen mit dem anderen der Umrisse erfolgt und mit einem Beobachtungsmittel (LB) an dem Austrittsabschnitt (V), dadurch gekennzeichnet, daß der Austrittsabschnitt (V), welcher den beiden optischen Beobachtungspfaden (V1, V2) gemeinsam ist, sich erstreckt von einem halbdurchsichtigen Blatt (L), welches den optischen Beobachtungspfad (V1) von der ersten Platine (P1) beugt, und welches durch den optischen Beobachtungspfad (V2) von der zweiten Platine (P2) durchquert wird, und daß pfad aufwärts- bzw. strahlaufwärtsliegend von diesem halbdurchsichtigen Blatt (L) der optische Beobachtungspfad (V2) von der zweiten Platine (P2) durch einen Spiegel (M) gebeugt wird, derart, daß in der Gesamtheit bzw. Gruppe der Beobachtungspfade (V1, V2) strahlaufwärts von dem Beobachtungsmittel (LB) lediglich das halbdurchsichtige Blatt (L) und der Spiegel (M) liegen.

2. Zentrierungsvorrichtung gemäß Anspruch 1, dadurch gekennzeichnet, daß pfadaufwärtsliegend des halbdurchsichtigen Blattes (L) der optische Beobachtungspfad (V1) von der ersten Platine (P1) praktisch vertikal ist.

3. Zentrierungsvorrichtung gemäß einem der Ansprüche 1, 2, dadurch gekennzeichnet, daß bezüglich des Spiegels (M) die zweite Platine (P2) auf derselben Seite ist wie der Austrittsabschnitt (V), welcher den beiden optischen Beobachtungspfaden (V1, V2) gemeinsam ist.

4. Zentrierungsvorrichtung gemäß einem der Ansprüche 1, 2, dadurch gekennzeichnet, daß bezüglich des Spiegels (M) die zweite Platine (P2) auf der gegenüberliegenden Seite von dem Austrittsabschnitt (V) ist, welcher den beiden optischen Beobachtungspfaden (V1, V2) gemeinsam ist.

5. Zentrierungsvorrichtung gemäß einem der Ansprüche 1 bis 4, dadurch gekennzeichnet, daß der Austrittsabschnitt (V), welcher den beiden optischen Beobachtungspfaden (V1, V2) gemeinsam ist, gegenüber der Vertikalen gemäß einem Winkel (A) geneigt ist, welcher praktisch gleich 30° ist.

6. Zentrierungsvorrichtung gemäß einem der Ansprüche 1 bis 5, dadurch gekennzeichnet, daß das Beobachtungsmittel (LB), welches in dem Austrittsabschnitt (V), welcher den beiden optischen Beobachtungspfaden (V1, V2) gemeinsam ist, zwischengelagert ist, eine binokulare Linse (LB) ist.

## Claims

1. A centering apparatus for an ophthalmic lens, of the type comprising two optical observation paths (V1, V2) which each issue from two separate plates (P1, P2) respectively, namely a first plate (P1) which is translucent and on which the ophthalmic lens to be centered is to be disposed, and a second plate (P2) which at a spacing from the first plate is formed by an electronic display screen and by virtue of which a template contour to which the contour of the ophthalmic lens is to be compared can be observed, said optical observation paths (V1, V2) having in common an emergent portion (V) by way of which the two of said contours are superposed for the observer, with on said emergent portion (V) an observation means (LB), characterised in that the emergent portion (V) which is common to the two optical observation paths (V1, V2) extends from a semi-transparent plate member (L) which bends back the optical observation path (V1) which issues from the first plate (P1) and through which passes the optical observation path (V2) which issues from the second plate (P2), and that upstream of said semi-transparent plate member (L) the optical observation path (V2) which issues from the second plate (P2) is bent back by a mirror (M), in such a way that only said semi-transparent plate member (L) and said mirror (M) are operable for all of the optical observations paths (V1, V2) upstream of the observation means (LB).

2. A centering apparatus according to claim 1 characterised in that upstream of the semi-transparent plate member (L) the optical observation path (V1) which issues from the first plate (P1) is substantially vertical.

3. A centering apparatus according to either one of claims 1 and 2 characterised in that with respect to the mirror (M) the second plate (P2) is on the same side as the emergent portion (V) which is common to the two optical observation paths (V1, V2).

4. A centering apparatus according to either one of claims 1 and 2 characterised in that with respect to the mirror (M) the second plate (P2) is on the opposite side to the emergent portion (V) which is common to the two optical observation paths (V1, V2).

5. A centering apparatus according to any one of claims 1 to 4 characterised in that the emergent portion (V) which is common to the two optical observation paths (V1, V2) is inclined relative to the vertical at an angle (A) which is substantially equal to 30°.

6. A centering apparatus according to any one of claims 1 to 5 characterised in that the observation means (LB) interposed on the emergent portion (V) which is common to the two optical observation paths (V1, V2) is a binocular lens (LB).
